(19) Europäisches Patentamt

European Patent Office

Office européen des brevets

(11) **EP 1 012 653 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(21) Anmeldenummer: **98950019.4**

(22) Anmeldetag: **10.09.1998**

(51) Int Cl.$^7$: **G02B 17/06**, G02B 27/09

(86) Internationale Anmeldenummer:
**PCT/EP98/05769**

(87) Internationale Veröffentlichungsnummer:
**WO 99/14624 (25.03.1999 Gazette 1999/12)**

(54) **OPTISCHER SENDER ZUM AUSSENDEN VON LICHTSIGNALEN**

OPTICAL TRANSMITTER FOR EMITTING LIGHT SIGNALS

EMETTEUR OPTIQUE POUR L'EMISSION DE SIGNAUX LUMINEUX

(84) Benannte Vertragsstaaten:
**GB IT NL PT SE**

(30) Priorität: **12.09.1997 DE 19740243**

(43) Veröffentlichungstag der Anmeldung:
**28.06.2000 Patentblatt 2000/26**

(73) Patentinhaber: **STN ATLAS Elektronik GmbH
28309 Bremen (DE)**

(72) Erfinder: **MALSBENDER, Dieter
D-28217 Bremen (DE)**

(74) Vertreter: **Thul, Hermann, Dipl.-Phys. et al
Zentrale Patentabteilung,
Rheinmetall AG,
Rheinmetall Allee 1
40476 Düsseldorf (DE)**

(56) Entgegenhaltungen:
**EP-A- 0 373 700        WO-A-96/03670
US-A- 4 081 667**

• **PATENT ABSTRACTS OF JAPAN vol. 095, no. 010, 30. November 1995 & JP 07 168122 A (NIKON CORP), 4. Juli 1995**

EP 1 012 653 B1

**Beschreibung**

Die Erfindung betrifft einen optischen Sender zum Aussenden von Lichtsignalen, insbesondere zum gleichzeitigen Aktivieren von in einem Raumbereich vorhandenen Lichtsignalempfängern, der im Oberbegriff des Anspruchs 1 definierten Gattung.

Solche optischen Sender werden bei simulierten Gefechten mit Duellsimulatoren im Gelände eingesetzt und dienen zur Aktivierung von Lichtsignalempfängern, mit denen an dem Gefecht teilnehmende Einheiten ausgerüstet sind.

Bei simulierten Gefechten im Gelände wird ein Schuß dadurch simuliert, daß ein aus codierten Laserimpulsen bestehender scharf gebündelter Laserstrahl ausgesendet wird. Trifft ein solcher Laserpuls einen Gefechtsteilnehmer, so wird dessen Lichtsignalempfänger aktiviert, der dem Gefechtsteilnehmer - und der Gefechtsleitung - den Treffer anzeigt und dessen Ausschluß von der weiteren Teilnahme an dem Gefecht offenkundig werden läßt. Mit solchen Lichtsignalempfängern sind Fahrzeuge, wie Panzer, Mannschaftswagen und dgl. ausgerüstet, aber auch am Gefecht teilnehmende Einzelpersonen ausgestattet. Wird beispielsweise ein mit einem solchen Lichtsignalempfänger ausgestatteter Mannschaftswagen von einem Laserschuß getroffen, so wird er durch Aktivierung seines Lichtsignalempfängers als "abgeschossen" gekennzeichnet und muß aus der Gefechtsübung ausscheiden. Das gleiche hat für die in dem Mannschaftswagen sitzende Mannschaft sowie für den Fahrer und Beifahrer zu gelten. Da diese sich jedoch im Fahrzeuginnern aufhalten, kann der Laserschuß deren Lichtsignalempfänger nicht erreichen.

Um auch bei einem solchen Laserschußtreffer die Lichtsignalempfänger der Einzelpersonen im Fahrzeuginneren zu aktivieren und dort diese Personen definitiv als von weiteren Gefechtshandlungen ausgeschlossen zu kennzeichnen, ist im Fahrzeuginnern ein optischer Sender, Hitsender genannt, vorgesehen, der nach Ansteuerung durch den Lichtsignalempfänger des Fahrzeugs einen Laserpulscode im Fahrzeuginnern abstrahlt, um die Lichtsignalempfänger der hier vorhandenen Personen zu aktivieren. Um alle Lichtsignalempfänger zu erreichen muß ein solcher Hitsender daher weitgehend diffus abstrahlen.

Der Erfindung liegt die Aufgabe zugrunde, einen optischen Sender (Hitsender) der eingangs genannten Art zu schaffen, der einen möglichst großen Raumwinkel beleuchtet und dabei kompakt und robust ist sowie preiswert gefertigt werden kann.

Die Aufgabe ist bei einem optischen Sender der im Oberbegriff des Anspruchs 1 angegebenen Gattung erfindungsgemäß durch die Merkmale im Kennzeichenteil des Anspruchs 1 gelöst.

Der erfindungsgemäße optische Sender hat den Vorteil, daß er Laserlicht homogen in einen wählbaren Raumwinkel von mehr als 180° abstrahlt und hierzu nur eine einzige Laserdiode erforderlich ist, die vorzugsweise impulsbetrieben wird. Durch den Primärspiel im direkten Strahlengang der Laserdiode ist ein Blick längs der optischen Achse in die Laserdiode nicht möglich, so daß sich in Nähe des optischen Senders aufhaltende Personen nicht gefährdet werden. Durch Auswechseln des Fresnelspiegels kann auch nachträglich noch der Beleuchtungsraumwinkel geändert werden. Der Fresnelspiegel ist ein sehr preiswertes Bauteil, insbesondere dann, wenn er gemäß einer vorteilhaften Ausführungsform der Erfindung als Preß- oder Drehteil aus Aluminium oder Kupfer hergestellt wird, so daß eine nachträgliche Änderung des Beleuchtungsraumwinkels keine Kostendiskussionen aufkommen läßt.

Zweckmäßigen Ausführungsformen des erfindungsgemäßen optischen Senders mit vorteilhaften Weiterbildungen und Ausgestaltungen der Erfindung ergeben ich aus den weiteren Ansprüchen.

Gemäß einer bevorzugten Ausführungsform der Erfindung ist der Fresnelspiegel von einer lichtdurchlässigen, kuppelartigen Haube abgedeckt, in deren Kuppelzentrum der Primärspiegel befestigt ist. Die Haube schützt den Fresnelspiegel und die Laserdiode gegen Staub und Beschädigung und dient gleichzeitig als Träger für den Primärspiegel. Insgesamt ergibt sich damit eine kompakte Bauform, die weitgehend unempfindlich gegen mechanische Stöße und Erschütterungen sowie Staubentwicklung und damit gut geeignet für den Einsatz in rauher Umgebung ist.

Die Erfindung ist anhand eines in der Zeichnung dargestellten Ausführungsbeispiels im folgenden näher beschrieben. Es zeigen in jeweils schematischer Darstellung:

Fig.1   einen Längsschnitt eines optischen Senders,

Fig.2   ausschnittweise eine vergrößerte Darstellung eines Längsschnitts eines Fresnelspiegels im optischen Sender gem. Fig 1.

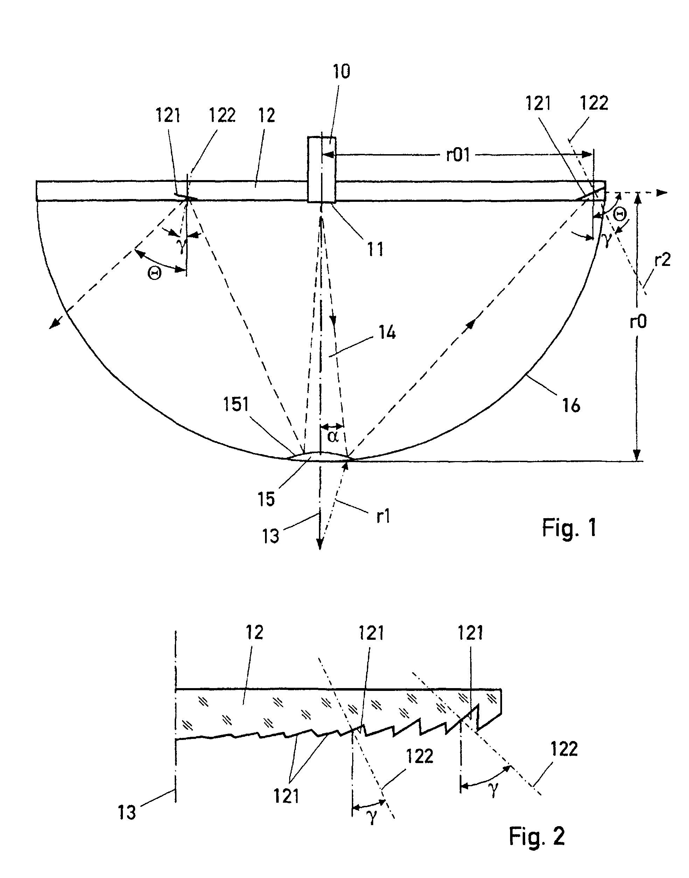

Der in Fig.1 schematisch und im Längsschnitt dargestellte optische Sender zum Aussenden von Lichtsignalen, auch Hitsender genannt, dient zum gleichzeitigen Aktivieren von in einem Raumbereich vorhandenen Lichtsignalempfängern. Im konkreten Ausführungsbeispiel sind die an einem im Gelände stattfindenden simulierten Gefecht teilnehmenden Einzelpersonen mit einem Lichtsignalempfänger ausgerüstet, der durch codierte Laserimpulse aktiviert wird, wobei der aktivierte Lichtsignalempfänger dann Zeichen setzt, die kenntlich machen, daß diejenige Person von der weiteren Teilnahme an der Gefechtsübung ausgeschlossen ist. Der optische Sender ist beispielsweise in einem Mannschaftswagen installiert und vermag den gesamten Innenraum, in dem eine Mannschaft von Einzelpersonen befördert wird, auszuleuchten. Wird beispielsweise der Mannschaftswagen, der ebenfalls mit einem Lichtsignalempfänger ausgerüstet ist, von einem Laserschuß getroffen und damit an der weiteren Teilnahme des Gefechts ausgeschlossen, so wird von dem Lichtsignalempfänger des Mannschaftswagens der optische Sender im Wageninnern aktiviert, der seinerseits per Laserlicht die von den Einzelpersonen getragenen Lichtsignalempfänger aktiviert, so daß auch die im Wageninnern befindlichen Einzelpersonen als von der weiteren Gefechtsübungsteilnahme ausgeschlossen gekennzeichnet werden.

Im einzelnen weist der optisch Sender eine einzige Laserdiode 10, die über eine Austrittsöffnung 11 einen insbesondere gepulsten Laserstrahl abstrahlt, und eine Sendeoptik auf. Durch eine der Laserdiode 10 vorgesetzte, hier nicht dargestellte Zylinderlinse hat die Austrittsöffnung 11 der Laserdiode 10 einen kreisrunden Querschnitt. Die Austrittsöffnung 11 der Laserdiode 10 ist im Zentrum eines Fresnelspiegel 12 angeordnet, wobei die Achsen von Austrittsöffnung 11 und Fresnelspiegel 12 miteinander fluchten. Diese Achsen bilden gleichzeitig die Abstrahlrichtung 13 der Laserdiode 10, die in Fig.1 strichpunktiert eingezeichnet ist. Der aus der Austrittsöffnung 11 austretende Laserstrahl, der sich aus Laserpulsen zusammensetzt, ist in Fig.1 mit 14 bezeichnet. Der Öffungswinkel des Laserstrahls 14, auch als Öffnungswinkel der Laserdiode 10 bezeichnet, beträgt $2\alpha$. Der Fresnelspiegel 12, der in Fig.1 nur schematisch und in Fig.2 ausschnittweise vergrößert dargestellt ist, weist in bekannter Weise eine Vielzahl von auf konzentrischen Ringen angeordneten Spiegelflächen 121 auf, deren optischen Achsen 122 unter einem unterschiedlichen Winkel $\gamma$ zur Abstrahlrichtung 13 angestellt sind, wobei die Anstellwinkel $\gamma$ der optischen Achsen 122 der Spiegelflächen 121 nach außen hin, also mit zunehmendem Radius der Ringzonen zunehmen. Alle Spiegelflächen 121 weisen in Abstrahlrichtung 13 der Laserdiode 10. Der Fresnelspiegel 12 ist als Dreh- oder Pressteil hergestellt und wird vorzugsweise aus Kupfer oder Aluminium gefertigt. Die Spiegelflächen 121 können bliebig gekrümmte Oberflächen aufweisen, und sind z.B. als konkave Kugelflächenabschnitte ausgeführt.

Zur Sendeoptik des Hitsenders gehört neben dem Fresnelspiegel 12 ein Primärspiegel 15, der in Abstrahlrichtung 13 der Laserdiode 10 mit Abstand vor der Austrittsöffnung 11 der Laserdiode 10 angeordnet ist, wobei die Achse des Primärspiegels 15 koaxial zu den Achsen von Laserdiode 10 und Austrittsöffnung 11 ausgerichtet ist, also mit der Abstrahlrichtung 13 und damit mit der Strahlenachse des Laserstrahls 14 fluchtet. Die konvexe Spiegelfläche 151 des Primärspiegels 15 weist dabei zum Fresnelspiegel 12. Der Abstand des Primärspiegels 15 von der Austrittsöffnung 11, der Öffnungswinkel $2\alpha$ der Laserdiode 10 und der Durchmesser des Primärspiegels 15 sind so aufeinander abgestimmt, daß die Querschnittsfläche des Laserstrahls 14 am Ort des Primärspiegels 15 kongruent mit dessen Spiegelfläche 151 ist. Der Primärspiegel 15 ist im Zentrum einer lichtdurchlässigen, kuppelartigen Haube 16 befestigt, die den Fresnelspiegel 12 überdeckt und gleichzeitig den Fresnelspiegel 12 gegen Staub und mechanische Beschädigung schützt. Im Ausführungsbeispiel der Fig.1 ist die Haube 16 als Kugelabschnitt ausgebildet, dessen Grundkreiseldurchmesser dem des scheibenförmigen Fresnelspiegels 12 entspricht und eine leicht lichtstreuende Wirkung besitzt.

Bei Aktivierung des Hitsenders strahlt die Laserdiode 10 über die Distanz r0 auf den Primärspiegel 15. Dieser reflektiert den Laserstrahl 14 zurück auf den Fresnelspiegel 12 welche den Strahl unter einem definierten Winkel $\theta$ durch die Haube 16 in den Raum reflektiert. Da der Winkel $\theta$ bei den Spiegelflächen 121 innerhalb einer Ringzone zwar gleich, von Ringzone zu Ringzone aber unterschiedlich ist, strahlt der Hitsender homogen Licht in einem Raumwinkel von gleich oder größer $180°$ ab.

Die Krümmungsradien r2 der Spiegelflächen 121 werden z.B. gemäß nachstehender Gleichung berechnet:

$$r2 = \frac{r01}{\sin \dfrac{\theta - \arctan \dfrac{r01 - r0\tan\alpha}{r0}}{2}}$$

wobei $\alpha$ der halbe Öffnungswinkel der Laserdiode 10 bzw. des gebündelten Laserstrahls 14, $\theta$ der gewünschte Abstrahlwinkel der Spiegelfläche 121, bezogen auf die Abstrahlrichtung 13 der Laserdiode 10, r0 der Abstand des Primärspiegels 15 von der Lichtaustrittsöffnung 11 und r01 der Querabstand der Mitte der Spiegelfläche 121 von der Achse der Austrittsöffnung 11 ist. Der Krümmungsradius r1 der konvexen Spiegeloberfläche 151 des Primärspiegels 15 berechnet sich dann beispielsweise nach nachstehender Gleichung

$$rl = \frac{r0 \cdot \tan\alpha}{\sin\left[\dfrac{\arctan\left[\dfrac{r01 - r0 \cdot \tan\alpha}{r0}\right] + \alpha}{2} - \alpha\right]}$$

Die Abstrahlwinkel θ der Spiegelflächen 121 in den einzelnen Ringzonen des Fresnelspiegels 12 werden so festgelegt, daß sich eine möglichst gleichförmige Lichtverteilung über die kugelabschnittförmige Haube 16 ergibt. Der durch den Primärspiegel 15 in Abstrahlrichtung 13, also in Richtung optischer Achse der Laserdiode 10, erzeugte Schattenkegel wird durch die Streuwirkung der Haube 16 und des Fresnelspiegels 12 ausgeleuchtet.

**Patentansprüche**

1. Optischer Sender zum Aussenden von Lichtsignalen, insbesondere zum gleichzeitigen Aktivieren von in einem Raumbereich vorhandenen Lichtsignalempfängern mit einer Laserdiode (10), die über eine Austrittsöffnung (11) einen insbesondere gepulsten Laserstrahl abstrahlt, und mit einer Sendeoptik, **dadurch gekennzeichnet, daß** die Sendeoptik einen Fresnelspiegel (12) und einen Primärspiegel (15) aufweist und daß die Austrittsöffnung (11) im Zentrum des mit seinen Spiegelflächen (121) in Abstrahlrichtung (13) der Laserdiode (10) weisenden Fresnelspiegel (12) koaxial zu diesem und der Primärspiegel (15) in Abstrahlrichtung (13) der Laserdiode (10) mit zum Fresnelspiegel (12) weisender konvexer Spiegelfläche (151) im Abstand vor und koaxial zu der Austrittsöffnung (11) angeordnet ist.

2. Sender nach Anspruch 1, **dadurch gekennzeichnet, daß** die Austrittsöffnung (11) der Laserdiode (10) kreisförmig ist.

3. Sender nach Anspruch 1 oder 2, **dadurch gekennzeichnet, daß** der Abstand (r0) des Primärspiegels (15) von der Austrittsöffnung (11) , der Öffnungswinkel (2α) der Laserdiode (10) und der Durchmesser des Primärspiegels (15) so aufeinander abgestimmt sind, daß die Querschnittsfläche des gebündelten Laserstrahls (14) am Ort des Primärspiegels (15) kongruent mit dessen Spiegelfläche (151) ist.

4. Sender nach einem der Ansprüche 1-3, **dadurch gekennzeichnet, daß** der Fresnelspiegel (12) von einer lichtdurchlässigen, kuppelartiben Haube (16) abgedeckt ist, in deren Kuppelzentrum der Primärspiegel (15) befestigt ist.

5. Sender nach Anspruch 4, **dadurch gekennzeichnet, daß** die Haube (16) eine leicht lichtstreuende Wirkung besitzt.

6. Sender nach Anspruch 4 oder 5, **dadurch gekennzeichnet**, das die Haube (16) als Kugelabschnitt ausgebildet ist, dessen Grundkreiseldurchmesser dem des scheibenförmigen Fresnelspiegels (12) entspricht.

7. Sender nach einem der Ansprüche 1-6, **dadurch gekennzeichnet, daß** der Fresnelspiegel (12) als Drehoder Preßteil hergestellt ist.

8. Sender nach einem der Ansprüche 1-7, **dadurch gekennzeichnet, daß** der Fresnelspiegel (12) aus Kupfer oder Aluminium besteht.

9. Sender nach einem der Ansprüche 1-8, **dadurch gekennzeichnet, daß** die Spiegelflächen (121) des Fresnelspiegels (12) gekrümmt sind.

**Claims**

1. Optical transmitter for emitting light signals, in particular for simultaneously activating light signal receivers present in a region of space, with the aid of a laser diode (10) which radiates a laser beam, in particular a pulsed one, via an exit aperture (11), and having an optical transmitting system, **characterized in that** the optical transmitting system has a Fresnel mirror (12) and a primary mirror (15), and **in that** the exit aperture (11) is arranged coaxially with and at the centre of the Fresnel mirror (12), which points with its reflecting surfaces (121) in the direction of radiation (13) of the laser diode (10), and the primary mirror (15) is arranged in the direction of radiation (13) of the laser diode (10) with a convex reflecting surface (151), pointing to the Fresnel mirror (12), at a distance in front of and coaxially with the exit aperture (11).

2. Transmitter according to Claim 1, **characterized in that** the exit aperture (11) of the laser diode (10) is circular.

3. Transmitter according to Claim 1 or 2, **characterized in that** the distance (r0) of the primary mirror (15) from the exit aperture (11), the aperture angle ($2\alpha$) of the laser diode (10) and the diameter of the primary mirror (15) are tuned to one another such that the cross-sectional surface of the focused laser beam (14) at the location of the primary mirror (15) is congruent with the reflecting surface (151) thereof.

4. Transmitter according to one of Claims 1-3, **characterized in that** the Fresnel mirror (12) is covered by a transparent, dome-like hood (16), at the centre of the dome of which the primary mirror (15) is fastened.

5. Transmitter according to Claim 4, **characterized in that** the hood (16) has a slightly light-scattering effect.

6. Transmitter according to Claim 4 or 5, **characterized in that** the hood (16) is designed as a spherical section, the diameter of whose base circle corresponds to that of the disc-shaped Fresnel mirror (12).

7. Transmitter according to one of Claims 1-6, **characterized in that** the Fresnel mirror (12) is produced as a turned or pressed part.

8. Transmitter according to one of Claims 1-7, **characterized in that** the Fresnel mirror (12) consists of copper or aluminium.

9. Transmitter according to one of Claims 1-8, **characterized in that** the reflecting surfaces (121) of the Fresnel mirror (12) are curved.

**Revendications**

1. Émetteur optique pour l'émission de signaux lumineux, en particulier pour l'activation simultanée de récepteurs de signaux lumineux présents dans un espace avec une diode laser (10), qui émet un faisceau laser en particulier pulsé, à travers une ouverture de sortie (11), et avec une optique d'émission,
**caractérisé en ce que** l'optique d'émission présente un miroir de Fresnel (12) et un miroir primaire (15) et **en ce que** l'ouverture de sortie (11) est disposée au centre du miroir de Fresnel (12), de manière coaxiale avec celui-ci, avec ses surfaces réfléchissantes (121) orientées en direction de l'émission (13) de la diode laser (10) et **en ce que** le miroir primaire (15) est disposé en direction de l'émission (13) de la diode laser (10) avec sa surface réfléchissante convexe (151) orientée en direction du miroir de Fresnel (12) à une certaine distance en avant de l'ouverture de sortie (11) et de manière coaxiale avec elle.

2. Émetteur selon la revendication 1, **caractérisé en ce que** l'ouverture de sortie (11) de la diode laser (10) est de forme circulaire.

3. Émetteur selon la revendication 1 ou 2, **caractérisé en ce que** la distance (r0) du miroir primaire (15) à partir de l'ouverture de sortie (11), l'angle d'ouverture ($2\alpha$) de la diode laser (10) et le diamètre du miroir primaire (15) sont accordés entre eux de telle sorte que la surface en section transversale du faisceau cohérent du laser (14) à l'emplacement du miroir primaire (15) coïncide avec sa surface réfléchissante (151).

4. Émetteur selon l'une des revendications 1 - 3, **caractérisé en ce que** le miroir de Fresnel (12) est recouvert d'une calotte (16) en forme de coupole laissant passer la lumière, le miroir primaire (15) étant fixé au centre de la coupole.

5. Émetteur selon la revendication 4, **caractérisé en ce que** la calotte (16) possède un léger effet de diffusion de la lumière.

6. Émetteur selon la revendication 4 ou 5, **caractérisé en ce que** la calotte (16) est en forme de section sphérique dont le diamètre du cercle de base correspond à celui du miroir de Fresnel (12) en forme de disque.

7. Émetteur selon l'une des revendications 1 - 6, **caractérisé en ce que** le miroir de Fresnel (12) est fabriqué sous la forme d'une pièce tournée ou pressée.

8. Émetteur selon l'une des revendications 1 - 7, **caractérisé en ce que** le miroir de Fresnel (12) est constitué de cuivre ou d'aluminium.

9. Émetteur selon l'une des revendications 1 - 8, **caractérisé en ce que** les surfaces réfléchissantes (121) du miroir de Fresnel (12) sont courbées.

Fig. 1

Fig. 2